# EUROPÄISCHE PATENTSCHRIFT

(11) **EP 3 959 106 B1**
(45) Veröffentlichungstag und Bekanntmachung des Hinweises auf die Patenterteilung: **17.07.2024**
(21) Anmeldenummer: 20714999.8
(22) Anmeldetag: 25.03.2020
(51) Int. Cl.: B60S 1/38, B60S 1/52

(54) **SCHEIBENWISCHERVORRICHTUNG**
WINDSHIELD WIPER DEVICE
DISPOSITIF D'ESSUIE-GLACE

(30) Priorität: 25.04.2019 DE 102019205920
(43) Veröffentlichungstag der Anmeldung: 02.03.2022
(73) Patentinhaber: Robert Bosch GmbH, 70442 Stuttgart (DE)
(72) Erfinder: CIRKOVIC, Nikola, 11080 Belgrade (RS)
(86) Internationale Anmeldenummer: PCT/EP2020/058291
(87) Internationale Veröffentlichungsnummer: WO 2020/216558

(56) Entgegenhaltungen:
- EP-A1- 2 692 598
- DE-A1- 102008 049 270
- DE-A1- 102014 114 691
- DE-C- 885 208
- US-A1- 2015 258 966

## Beschreibung

### Stand der Technik

In dem Dokument DE 10 2008 049 270 A1 ist bereits eine Scheibenwischervorrichtung mit zumindest einem Wischblattadapter, mit zumindest einem Wischarm, mit zumindest einem am Wischarm angeordneten Fluidkanal und mit zumindest einer Verbindungseinheit zur fluidtechnischen Verbindung des Fluidkanals mit dem Wischblattadapter, insbesondere mit einer Fluidanschlusseinheit des Wischblattadapters, vorgeschlagen worden.

### Offenbarung der Erfindung

Die Erfindung geht aus von einer Scheibenwischervorrichtung mit zumindest einem Wischblattadapter, mit zumindest einem Wischarm, mit zumindest einem am Wischarm angeordneten Fluidkanal und mit zumindest einer Verbindungseinheit zur fluidtechnischen Verbindung des Fluidkanals mit dem Wischblattadapter, insbesondere mit einer Fluidanschlusseinheit des Wisch blattadapters.

Es wird vorgeschlagen, dass die Verbindungseinheit zumindest einen Bajonettverschluss aufweist, mittels dessen der Fluidkanal an dem Wischblattadapter, insbesondere an der Fluidanschlusseinheit des Wischblattadapters, befestigbar ist.

Die Scheibenwischervorrichtung ist vorzugsweise Teil eines Scheibenwischers. Bevorzugt ist die Scheibenwischervorrichtung zu einem Einsatz an einem Fahrzeug, insbesondere einem Kraftfahrzeug, vorgesehen. Denkbar ist auch der Einsatz an einer Scheibenfront und/oder Spiegelfläche eines Gebäudes oder eines anderen statischen Objekts. Unter einem "Wischarm" soll insbesondere eine Einheit verstanden werden, welche dazu vorgesehen ist, eine Verbindung von einem Objekt, insbesondere dem Kraftfahrzeug, zu einem Wischblatt des Scheibenwischers zur Führung des Wischblattes auf einer Scheibe bereitzustellen und an dem Objekt, insbesondere dem Kraftfahrzeug, unverlierbar gelagert zu sein. Unter einem "Wischblattadapter" soll in diesem Zusammenhang insbesondere ein Adapter verstanden werden, der einen Kontaktbereich zu dem Wischblatt aufweist und mit dem Wischblatt unverlierbar verbunden und dazu vorgesehen ist, einen Kopplungsbereich des Wischblatts für eine Kopplung und/oder Kontaktierung mit dem Wischarm, insbesondere der Verbindungseinheit und/oder einem Wischarmadapter des Wischarms, bereitzustellen. Vorzugsweise weist die Fluidanschlusseinheit des Wischblattadapters zumindest ein korrespondierend zu zumindest einem Verbindungselement der Verbindungseinheit ausgebildetes Fluidanschlusselement auf. Bevorzugt ist die Fluidanschlusseinheit dazu vorgesehen, die Verbindungseinheit mit dem Wischblattadapter, insbesondere fluidtechnisch, zu verbinden. Unter einem "Wischblatt" soll insbesondere eine auswechselbare Vorrichtung des Scheibenwischers verstanden werden, welche einen Kontaktbereich zu einer Scheibe, insbesondere des Kraftfahrzeugs, ausbildet und dazu vorgesehen ist, mit der Scheibenwischervorrichtung, insbesondere dem Wischarm und/oder dem Wischarmadapter, unverlierbar verbunden zu werden.

Bevorzugt soll unter einem "Fluidkanal" ein kanalartiges Element zur Führung eines Fluids verstanden werden. Vorzugsweise weist der Fluidkanal einen zumindest im Wesentlichen kreisförmigen Querschnitt auf. Alternativ ist denkbar, dass der Fluidkanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Bevorzugt ist der Fluidkanal als ein Fluidleitungselement, wie beispielsweise als ein Rohr, als ein Schlauch, besonders bevorzugt als ein elastischer Schlauch, o. dgl., ausgebildet. Es ist vorstellbar, dass der Fluidkanal zumindest teilweise innerhalb einer Ausnehmung des Wischarms angeordnet ist und/oder von Halterungen an dem Wischarm gehalten ist. Vorzugsweise verläuft eine Haupterstreckungsachse des Fluidkanals in einem am Wischarm angeordneten Zustand des Fluidkanals zumindest größtenteils im Wesentlichen parallel zu einer Haupterstreckungsachse des Wischarms. Unter einer "Haupterstreckungsachse" eines Objekts soll insbesondere eine Achse verstanden werden, welche parallel zu einer längsten Kante eines kleinsten geometrischen Quaders verläuft, welcher das Objekt gerade noch vollständig umschließt. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist der Fluidkanal zu einer Verbindung eines Fluidaufnahmebehälters des Fahrzeugs mit dem Wischblatt vorgesehen. Vorzugsweise ist der Fluidkanal dazu vorgesehen, zumindest ein Fluid, insbesondere Wischwasser, aus dem Fluidaufnahmebehälter des Fahrzeugs an das Wischblatt, insbesondere an am Wischblatt angeordnete Wischwasserdüsen, des Scheibenwischers zu leiten, insbesondere mittels der Fluidanschlusseinheit des Wischblattadapters. Bevorzugt weist die Scheibenwischervorrichtung zumindest, insbesondere genau, zwei Fluidkanäle auf, die insbesondere von dem Fluidaufnahmebehälter zur Verbindungseinheit, insbesondere innerhalb und/oder an dem Wischarm angeordnet sind. Vorzugsweise ist der Fluidkanal mit der Verbindungseinheit verbunden. Bevorzugt ist der Fluidkanal fluidtechnisch mit der Verbindungseinheit, insbesondere mit einem Verbindungselement der Verbindungseinheit, verbunden.

Vorzugsweise ist die Verbindungseinheit dazu vorgesehen, eine, insbesondere fluidtechnische, Verbindung von der Scheibenwischervorrichtung zum Wischblatt, insbesondere zu am Wischblatt angeordneten Wischwasserdüsen, bereit zu stellen. Besonders bevorzugt ist die Verbindungseinheit zu einer fluidtechnischen Verbindung des Fluidkanals und der Fluidanschlusseinheit, insbesondere zumindest einem Fluidanschlusselement der Fluidanschlusseinheit, vorgesehen. Vorzugsweise ist die Verbindungseinheit in zumindest einem befestigten Zustand der Verbindungseinheit mit dem Wischblattadapter, insbesondere der Fluidanschlusseinheit des Wischblattadapters, verbunden. Vorzugsweise ist zumindest ein Verbindungselement der Verbindungseinheit als ein Rohrfortsatz, als ein Kanalelement o. dgl. ausgebildet. Insbesondere weist die Verbindungseinheit zumindest einen Fluidleitkanal zu einer Leitung des Fluids von dem Fluidkanal zum Wischblattadapter, insbesondere der Fluidanschlusseinheit auf. Bevorzugt weist das Verbindungselement, insbesondere in zumindest einem befestigten Zustand der Verbindungseinheit, eine zumindest im Wesentlichen gebogene oder L-förmige Grundform auf. Bevorzugterweise weist die Verbindungseinheit in zumindest einem befestigten Zustand der Verbindungseinheit, entlang zumindest einer zumindest im Wesentlichen senkrecht zur Haupterstreckungsachse des Wischarms, des Fluidkanals und/oder des Wischblattadapters ausgerichteten Achse eine maximale Quererstreckung auf, die kleiner ist als eine maximale Quererstreckung des Wischblattadapters entlang der Achse. Vorzugsweise erstreckt sich der Fluidleitkanal innerhalb des Verbindungselements von einem fluidkanalseitigen Ende des Verbindungselements zu einem wischblattadapterseitigen, insbesondere fluidanschlussseitigen, Ende des Verbindungselements. Bevorzugt weist der Fluidleitkanal, insbesondere entlang einer Fluidleitrichtung des Fluidleitkanals, einen zumindest im Wesentlichen runden und/oder n-eckigen Querschnitt auf. Es ist denkbar, dass das Verbindungselement als ein flexibler Schlauch und/oder ein Rohr ausgebildet ist und/oder einteilig mit dem Fluidkanal ausgebildet ist. Vorzugsweise ist das Verbindungselement zumindest größtenteils, insbesondere vollständig, aus einem Kunststoff, insbesondere einem Hartplastik, und/oder aus einem Metall ausgebildet. Es ist auch denkbar, insbesondere falls das Verbindungselement einteilig mit dem Fluidkanal ausgebildet ist, dass das Verbindungselement aus einem elastischen Material, wie beispielsweise Gummi, ausgebildet ist. Besonders bevorzugt weist die Verbindungseinheit zumindest zwei Fluidleitkanäle auf, die insbesondere fluidtechnisch getrennt ausgebildet sind. Vorzugsweise weist die Verbindungseinheit zumindest ein weiteres Verbindungselement auf, wobei jeweils einer der Fluidleitkanäle an dem Verbindungselement und dem weiteren Verbindungselement angeordnet ist. Bevorzugt sind das Verbindungselement und das weitere Verbindungselement einstückig ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Vorzugsweise ist der Bajonettverschluss in zumindest einem befestigten Zustand der Verbindungseinheit zumindest teilweise an dem Verbindungselement der Verbindungseinheit angeordnet. Bevorzugt ist der Bajonettverschluss zumindest teilweise an dem Wischblattadapter, insbesondere der Fluidanschlusseinheit, angeordnet. Vorzugsweise weist der Bajonettverschluss zumindest eine Drehachse auf, um die zumindest eine Relativbewegung der Verbindungseinheit und des Wischblattadapters, insbesondere der Fluidanschlusseinheit, zu einem Befestigen des Fluidkanals an dem Wischblattadapter erfolgt. Bevorzugt ist der Bajonettverschluss in dem befestigten Zustand der Verbindungseinheit in einem verschlossenen Zustand ausgebildet, wobei insbesondere zumindest ein Bajonettverschlusselement und zumindest ein Bajonettgegenverschlusselement des Bajonettverschlusses ineinandergreifen. Besonders bevorzugt ist der Bajonettverschluss, falls die Verbindungseinheit zumindest ein weiteres Verbindungselement umfasst, zumindest teilweise an dem weiteren Verbindungselement angeordnet.

Es ist denkbar, dass die Verbindungseinheit zumindest ein Griffelement aufweist. Vorzugsweise ist das Griffelement zumindest teilweise an dem Bajonettverschluss und/oder einem Verbindungselement der Verbindungseinheit angeordnet. Bevorzugt ist das Griffelement dazu vorgesehen, zumindest eine Bedienerkraft um die Drehachse des Bajonettverschlusses und/oder entlang einer Verbindungsachse der Verbindungseinheit auf den Bajonettverschluss und/oder das Verbindungselement zu übertragen. Insbesondere weist das Griffelement zumindest eine Betätigungsfläche auf, die dazu vorgesehen ist, die Bedienerkraft aufzunehmen. Vorzugsweise weist das Griffelement, insbesondere die Betätigungsfläche, zumindest teilweise eine angeraute Oberfläche auf. Es ist aber auch denkbar, dass das Griffelement, insbesondere die Betätigungsfläche, zumindest teilweise gerippt und/oder gerändelt ausgebildet ist.

Bevorzugt ist die Verbindungsachse, insbesondere in zumindest einem befestigten Zustand der Verbindungseinheit, zumindest im Wesentlichen senkrecht zu einer Haupterstreckungsebene des Wischblattadapters ausgerichtet. Vorzugsweise ist die Verbindungsachse, insbesondere in zumindest einem befestigten Zustand der Verbindungseinheit, zumindest im Wesentlichen senkrecht zu einer Querschnittsfläche einer wischblattadapterseitigen Öffnung des Verbindungselements in einem montierten Zustand der Verbindungseinheit ausgerichtet. Bevorzugt ist die Verbindungsachse, insbesondere in zumindest einem befestigten Zustand der Verbindungseinheit, zumindest im Wesentlichen parallel zur Drehachse des Bajonettverschlusses ausgebildet. Unter "zumindest im Wesentlichen senkrecht" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2°, aufweist. Unter einer "Haupterstreckungsebene" einer Baueinheit, insbesondere des Betätigungselements, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Durch die erfindungsgemäße Ausgestaltung der Scheibenwischervorrichtung kann eine vorteilhaft einfache und sichere Verbindung des Fluidkanals mit dem Wischblattadapter realisiert werden. Es kann ein vorteilhaft hoher Benutzerkomfort bei einer Montage des Wischblatts, des Wischarms und/oder des Scheibenwischers ermöglicht werden. Es kann vorteilhaft ein zufälliges und/oder ungewolltes Lösen des Fluidkanals und/oder des Wischblattadapters weitestgehend vermieden werden.

Des Weiteren wird vorgeschlagen, dass der Bajonettverschluss zumindest ein Bajonettverschlusselement und zumindest ein Bajonettgegenverschlusselement aufweist, wobei das Bajonettverschlusselement, insbesondere über ein Verbindungselement der Verbindungseinheit, an dem Fluidkanal angeordnet ist und das Bajonettgegenverschlusselement an dem Wischblattadapter, insbesondere der Fluidanschlusseinheit, angeordnet ist. Vorzugsweise sind das Bajonettverschlusselement und das Bajonettgegenverschlusselement korrespondierend zueinander ausgebildet. Bevorzugt ist das Bajonettverschlusselement an dem Verbindungselement angeordnet, insbesondere einstückig mit dem Verbindungselement ausgebildet. Insbesondere ist das Bajonettgegenverschlusselement einstückig mit dem Wischblattadapter, insbesondere einem Fluidanschlusselement der Fluidanschlusseinheit, ausgebildet. Bevorzugt ist das Bajonettverschlusselement als ein Fortsatz, als ein Zapfen, als ein Stift, als ein Bolzen, als ein Steg o. dgl. ausgebildet. Vorzugsweise ist das Bajonettgegenverschlusselement als eine Aussparung, als eine Nut, als eine Führungsbahn, als ein Haken, als ein Steg o. dgl. ausgebildet. Bevorzugt ist das Bajonettgegenverschlusselement derart ausgebildet, dass es zumindest größtenteils um die Drehachse an dem Wischblattadapter, insbesondere dem Fluidanschlusselement angeordnet ist. Insbesondere ist das Bajonettgegenverschlusselement zumindest größtenteils um einen gesamten Umfang des Fluidanschlusselements, insbesondere an einer Innenseite des Fluidanschlusselements, angeordnet. Bevorzugt umschließt das Bajonettgegenverschlusselement das Verbindungselement und/oder das Bajonettverschlusselement in zumindest einer Ebene zumindest größtenteils. Vorzugsweise sind das Bajonettverschlusselement und das Bajonettgegenverschlusselement dazu vorgesehen, bei einem Verbinden des Fluidkanals mit dem Wischblattadapter, insbesondere der Fluidanschlusseinheit, ineinander zu greifen. Durch die erfindungsgemäße Ausgestaltung der Scheibenwischervorrichtung kann eine vorteilhaft einfache und sichere Verbindung des Fluidkanals mit dem Wischblattadapter ermöglicht werden.

Zudem wird vorgeschlagen, dass der Bajonettverschluss zumindest ein, insbesondere das zuvor genannte, Bajonettverschlusselement, zumindest ein, insbesondere das zuvor genannte, Bajonettgegenverschlusselement und zumindest ein Federelement aufweist, wobei das Federelement dazu vorgesehen ist, das Bajonettverschlusselement und/oder das Bajonettgegenverschlusselement in zumindest einem befestigten Zustand der Verbindungseinheit mit einer Federkraft zu beaufschlagen. Vorzugsweise ist das Federelement als eine Druckfeder ausgebildet. Bevorzugt ist das Federelement beispielsweise als eine Spiralfeder, als eine Blattfeder, als eine Schraubenfeder o. dgl. ausgebildet. Es sind jedoch auch andere Ausgestaltungen des Federelements denkbar. Vorzugsweise sind/ist das Federelement, das Bajonettverschlusselement und/oder das Bajonettgegenverschlusselement derart angeordnet, dass die Federkraft in eine zu der Drehachse und/oder der Verbindungsachse zumindest im Wesentlichen parallel ausgerichtete Richtung wirkt. Vorzugsweise weist das Bajonettgegenverschlusselement zumindest eine Anlagefläche auf, wobei das Bajonettverschlusselement durch die Federkraft mittels des Federelements zumindest teilweise an der Anlagefläche anliegt. Vorzugsweise ist das Federelement an dem Bajonettgegenverschlusselement, insbesondere an der Fluidanschlusseinheit, angeordnet. Es ist aber auch denkbar, dass das Federelement an dem Bajonettverschlusselement angeordnet ist. Durch die erfindungsgemäße Ausgestaltung der Scheibenwischervorrichtung kann eine vorteilhaft sichere Verbindung des Fluidkanals mit dem Wischblattadapter über die Verbindungseinheit realisiert werden, insbesondere da durch das Federelement ein unbeabsichtigtes Lösen der Verbindung zumindest weitestgehend vermieden werden kann.

Ferner weist die Verbindungseinheit erfindungsgemäß zumindest ein Führungselement auf, das eine, insbesondere zumindest teilweise geöffnete, Führungsbahn bildet, die dazu vorgesehen ist, zumindest ein Verbindungselement, insbesondere das weitere Verbindungselement, der Verbindungseinheit bei einem Befestigen des Fluidkanals an dem Wischblattadapter zu führen oder die Verbindungseinheit weist zumindest ein Dichtungselement auf, welches zumindest teilweise an dem Bajonettverschluss, insbesondere an einem Verbindungselement der Verbindungseinheit, angeordnet ist. Vorzugsweise ist das Führungselement zumindest teilweise an einem weiteren Fluidanschlusselement der Fluidanschlusseinheit angeordnet. Vorzugsweise ist das weitere Fluidanschlusselement beabstandet von dem Fluidanschlusselement an dem Wischblattadapter angeordnet. Bevorzugt weist das Führungselement in zumindest einer zumindest im Wesentlichen senkrecht zur Verbindungsachse und/oder zur Drehachse ausgerichteten Ebene durch das Führungselement eine zumindest im Wesentlichen kreisringsegmentförmige Grundform auf, die insbesondere über einen Winkel von zumindest im Wesentlichen 180° ausgebildet ist. Unter "zumindest im Wesentlichen" soll insbesondere verstanden werden, dass eine Abweichung von einem vorgegebenen Wert insbesondere weniger als 25%, vorzugsweise weniger als 10% und besonders bevorzugt weniger als 5% des vorgegebenen Werts beträgt. Es ist aber auch denkbar, dass die kreissegmentförmige Grundform des Führungselements über einen Winkel von weniger als 180° ausgebildet ist. Vorzugsweise ist das Führungselement zumindest teilweise um eine zumindest im Wesentlichen senkrecht zur Verbindungsachse und/oder zur Drehachse ausgerichteten Mittelachse des weiteren Fluidanschlusselements angeordnet. Besonders bevorzugt ist das weitere Fluidanschlusselement an dem das Führungselement zumindest teilweise angeordnet ist und/oder das Führungselement beabstandet von der Drehachse des Bajonettverschlusses angeordnet. Es ist auch denkbar, dass das Führungselement eine geschlossene Führungsbahn bildet, die insbesondere in zumindest einer Schnittebene des weiteren Fluidanschlusselements zumindest im Wesentlichen vollständig um das weitere Fluidanschlusselement ausgebildet ist und zumindest eine Einführausnehmung aufweist. Darunter, dass ein Bauteil, insbesondere die Führungsbahn, in einer Ebene "zumindest im Wesentlichen vollständig" um ein weiteres Bauteil,
insbesondere das weitere Fluidanschlusselement, ausgebildet ist, soll insbesondere verstanden werden, dass das Bauteil das weitere Bauteil innerhalb der Ebene betrachtet über einen Winkelbereich von insbesondere zumindest 350°, vorzugsweise zumindest 355° und besonders bevorzugt zumindest 359°, um einen gemeinsamen Mittelpunkt des Bauteils und des weiteren Bauteils umgibt. Vorzugsweise ist die geschlossene Führungsbahn derart ausgebildet, dass die geschlossene Führungsbahn in zumindest einer Schnittebene der Führungsbahn in einem zumindest im Wesentlichen gleichbleibenden Abstand um ein virtuelles Kreissegment verläuft, wobei zumindest ein Ende des virtuellen Kreissegments auf der zumindest im Wesentlichen senkrecht zur Verbindungsachse und/oder zur Drehachse ausgerichteten Mittelachse des weiteren Fluidanschlusselements angeordnet ist. Bevorzugt ist das Führungselement dazu vorgesehen, das weitere Verbindungselement zu führen. Besonders bevorzugt weist der Bajonettverschluss zumindest ein weiteres Bajonettgegenverschlusselement auf, welches an dem weiteren Fluidanschlusselement und/oder dem Führungselement angeordnet ist. Vorzugsweise weist der Bajonettverschluss zumindest ein weiteres Bajonettverschlusselement auf, welches an dem weiteren Verbindungselement angeordnet ist. Bevorzugt ist das weitere Bajonettverschlusselement dazu vorgesehen, das weitere Verbindungselement an dem weiteren Fluidanschlusselement zu befestigen. Durch die erfindungsgemäße Ausgestaltung der Scheibenwischervorrichtung kann eine vorteilhaft einfache und sichere Verbindung zwischen Fluidkanal und Wischblattadapter ermöglicht werden. Es kann eine vorteilhaft einfache und sichere Befestigung des Bajonettverschlusses erreicht werden, insbesondere da zumindest ein Element des Bajonettverschlusses zu einer Befestigung der Verbindungseinheit mit der Fluidanschlusseinheit geführt werden kann. Es kann eine vorteilhaft einfache und schnelle Befestigung von mehreren Verbindungselementen ermöglicht werden, insbesondere da lediglich eine Rotationsbewegung zu einer Befestigung des Bajonettverschlusses benötigt werden kann. Das weitere Verbindungselement kann vorteilhaft sicher, insbesondere gegen einen Druck durch eine Leitung des Fluids, an dem weiteren Fluidanschlusselement gehalten werden.

Des Weiteren wird vorgeschlagen, dass die Verbindungseinheit zumindest ein, insbesondere das zuvor genannte, Führungselement aufweist, das eine, insbesondere zumindest teilweise geöffnete, Führungsbahn bildet, wobei das Führungselement zumindest einen Klemmfortsatz aufweist, der dazu vorgesehen ist, zumindest ein Bajonettverschlusselement des Bajonettverschlusses in zumindest einem befestigten Zustand des Fluidkanals an dem Wischblattadapter mit einer Klemmkraft zu beaufschlagen. Vorzugsweise ist der Klemmfortsatz dazu vorgesehen, das Bajonettverschlusselement über eine kraft- und formschlüssige Verbindung zwischen dem Bajonettverschlusselement und dem Klemmfortsatz mit der Klemmkraft zu beaufschlagen. Insbesondere ist der Klemmfortsatz zumindest teilweise an dem weiteren Bajonettgegenverschlusselement und/oder dem weiteren Fluidanschlusselement angeordnet. Bevorzugt ist die Klemmkraft zumindest im Wesentlichen entgegen einer Führungsrichtung der Verbindungseinheit gerichtet. Vorzugsweise ist die Führungsrichtung zumindest im Wesentlichen senkrecht zu der zumindest im Wesentlichen parallel zu der Verbindungsachse und/oder der Drehachse ausgerichteten Mittelachse des weiteren Fluidanschlusselements um die Drehachse ausgerichtet. Es ist aber auch denkbar, dass die, insbesondere als Reibungskraft ausgebildete, Klemmkraft zumindest im Wesentlichen parallel zu der Verbindungsachse, der Drehachse und/oder der Mittelachse des weiteren Fluidanschlusselements gerichtet ist. Durch die erfindungsgemäße Ausgestaltung der Scheibenwischervorrichtung, insbesondere durch das Führungselement mit Klemmfortsatz, kann eine vorteilhaft einfache und sichere Befestigung der Verbindungseinheit an der Fluidkanaleinheit, insbesondere des weiteren Verbindungselements an dem weiteren Fluidanschlusselement, realisiert werden. Es kann vorteilhaft ein unbeabsichtigtes Lösen des weiteren Verbindungselements von dem weiteren Fluidanschlusselement zumindest weitestgehend vermieden werden. Das weitere Verbindungselement kann vorteilhaft sicher, insbesondere gegen einen Druck durch eine Leitung des Fluids, an dem weiteren Fluidanschlusselement gehalten werden.

Zudem wird vorgeschlagen, dass der Bajonettverschluss zumindest zwei Bajonettverschlusselemente und zumindest ein, insbesondere das zuvor genannte, Bajonettgegenverschlusselement aufweist, welches zumindest zwei Aufnahmeöffnungen zur Aufnahme der Bajonettverschlusselemente bei einem Befestigen des Fluidkanals an dem Wischblattadapter umfasst. Vorzugsweise sind die zwei Bajonettverschlusselemente an dem Verbindungselement angeordnet. Bevorzugt sind die zwei Bajonettverschlusselemente in einem wischblattadapterseitigen, insbesondere fluidanschlussseitigen, Endbereich des Verbindungselements angeordnet. Vorzugsweise sind die zwei Bajonettverschlusselemente in zumindest einer Schnittebene des Verbindungselements gleichmäßig verteilt an einer Grundform, insbesondere um eine Grundform, des Verbindungselements angeordnet. Besonders bevorzugt ist das Bajonettgegenverschlusselement an dem Fluidanschlusselement angeordnet. Vorzugsweise ist das Bajonettgegenverschlusselement zumindest größtenteils an einer Innenseite des Fluidanschluss-elements angeordnet. Bevorzugt sind die Aufnahmeöffnungen in zumindest einer Schnittebene des Bajonettgegenverschlusselements gleichmäßig verteilt an dem Bajonettgegenverschlusselement angeordnet. Insbesondere sind die Aufnahmeöffnungen korrespondierend zu einer Anordnung der Bajonettverschlusselemente an dem Verbindungselement an dem Bajonettgegenverschlusselement angeordnet. Vorzugsweise weisen die Aufnahmeöffnungen in zumindest einer zumindest im Wesentlichen senkrecht zu der Verbindungsachse und/oder der Drehachse ausgerichteten Schnittebene des Bajonettgegenverschlusselements eine zumindest im Wesentlichen rechteckige Grundform auf. Es sind jedoch auch andere Ausgestaltungen der Aufnahmeöffnungen, insbesondere mit einer beispielsweise zumindest im Wesentlichen kreissegmentförmigen, dreieckigen und/oder n-eckigen Grundform, denkbar. Vorzugsweise sind die Aufnahmeöffnungen entlang einer zumindest im Wesentlichen parallel zur Verbindungsrichtung und/oder der Drehachse ausgerichteten Richtung über eine Höhe des Bajonettgegenverschlusselements ausgebildet, die sich von einer gesamten Höhe des Bajonettgegenverschlusselements unterscheidet. Durch die erfindungsgemäße Ausgestaltung der Scheibenwischervorrichtung kann ein vorteilhaft sicheres Befestigen des Fluidkanals an dem Wischblattadapter ermöglicht werden. Durch eine Anordnung der Bajonettverschlusselemente und der Aufnahmeöffnungen kann vorteilhaft eine Ausrichtung des Verbindungselements an dem Wischblattadapter, insbesondere der Fluidanschlusseinheit, vorgegeben werden. Es kann ein vorteilhaft hoher Bedienkomfort erreicht werden, insbesondere da ein fehlerhaftes Befestigen der Verbindungseinheit zumindest im Wesentlichen vermieden werden kann.

Bevorzugt ist das zuvor genannte Dichtungselement dazu vorgesehen, die Verbindung zwischen der Verbindungseinheit und dem Wischblattadapter, insbesondere der Fluidanschlusseinheit, gegen ein Austreten des Fluids abzudichten. Vorzugsweise ist das Dichtungselement beispielsweise als ein Dichtungsring, als Push-Fit-Element, als ein Film aus, insbesondere chemischem, Dichtungsmittel o.dgl. ausgebildet. Besonders bevorzugt ist das Dichtungselement in zumindest einer zumindest im Wesentlichen senkrecht zu der Verbindungsachse und/oder der Drehachse ausgerichteten Schnittebene der Verbindungseinheit, insbesondere des Verbindungselements und/oder des weiteren Verbindungselements, zumindest im Wesentlichen vollständig um eine zumindest im Wesentlichen parallel zu der Verbindungsachse und/oder der Drehachse ausgerichtete Mittelachse des Bajonettverschlusses, des Verbindungselements und/oder des weiteren Verbindungselements an dem Bajonettverschluss, dem Verbindungselement und/oder dem weiteren Verbindungselement angeordnet. Durch die erfindungsgemäße Ausgestaltung der Scheibenwischervorrichtung kann eine vorteilhaft hohe Dichtigkeit der Verbindung zwischen dem Fluidkanal und dem Wischblattadapter erreicht werden. Es kann eine vorteilhaft hohe Langlebigkeit der Scheibenwischervorrichtung erreicht werden, insbesondere da eine Dichtigkeit der Verbindung unabhängig von einem reinen Formschluss ermöglicht werden kann. Es kann ein vorteilhaft hoher Betriebsdruck des Fluids ermöglicht werden ohne die Dichtigkeit der Verbindung zu beeinflussen.

Des Weiteren wird vorgeschlagen, dass der Bajonettverschluss zumindest ein, insbesondere das zuvor genannte, Bajonettgegenverschlusselement und zumindest ein, insbesondere das zuvor genannte, weiteres Bajonettgegenverschlusselement aufweist, wobei das Bajonettgegenverschlusselement und das weitere Bajonettgegenverschlusselement entlang zumindest einer zumindest im Wesentlichen parallel zu einer Haupterstreckungsachse des Wischblattadapters ausgerichteten Achse betrachtet versetzt zueinander an dem Wischblattadapter angeordnet sind. Vorzugsweise sind das Bajonettgegenverschlusselement und das weitere Bajonettgegenverschlusselement entlang zumindest einer zumindest im Wesentlichen senkrecht zu der Haupterstreckungsachse des Wischblattadapters ausgerichteten Achse betrachtet versetzt zueinander an dem Wischblattadapter angeordnet. Durch die erfindungsgemäße Ausgestaltung der Scheibenwischervorrichtung kann ein vorteilhaft hoher Bedienkomfort ermöglicht werden, insbesondere da die Verbindungseinheit bei einem Befestigen an den Bajonettgegenverschlusselementen, insbesondere der Fluidanschlusseinheit, jederzeit eine hohe räumliche Zugänglichkeit für einen Benutzer aufweisen. Es kann ein Befestigen und ein Lösen der Verbindungseinheit und/oder des Fluidkanals an und/oder von dem Wischblattadapter vorteilhaft vereinfacht werden.

Zudem wird vorgeschlagen, dass die Verbindungseinheit zumindest ein mit dem Fluidkanal verbundenes, insbesondere das zuvor genannte, Verbindungselement aufweist an dem zumindest ein, insbesondere das zuvor genannte, Bajonettverschlusselement des Bajonettverschlusses angeordnet ist, wobei in zumindest einem befestigten Zustand der Verbindungseinheit eine Längsachse des Verbindungselements gleich einer Drehachse des Bajonettverschlusses ist. Vorzugsweise ist die Längsachse des Verbindungselements in zumindest einem befestigten Zustand der Verbindungseinheit zumindest im Wesentlichen parallel, insbesondere innerhalb, der Verbindungsachse der Verbindungseinheit ausgerichtet. Bevorzugt weist das weitere Verbindungselement eine Längsachse auf, die in zumindest einem befestigten Zustand der Verbindungseinheit zumindest im Wesentlichen parallel zur Drehachse und/oder der Verbindungsachse ausgerichtet ist. Bevorzugterweise sind/ist die Längsachsen des Verbindungselements und/oder des weiteren Verbindungselements in zumindest einem befestigten Zustand der Verbindungseinheit zumindest im Wesentlichen senkrecht zu einer Haupterstreckungsebene des Wischblattadapters ausgerichtet. Durch die erfindungsgemäße Ausgestaltung der Scheibenwischervorrichtung kann eine vorteilhaft einfache und sichere Befestigung des Fluidkanals an dem Wischblattadapter ermöglicht werden, insbesondere da das Verbindungselement und/oder das weitere Verbindungselement zu einem Befestigen über den Bajonettverschluss um die jeweilige Längsachse gedreht werden kann. Es kann eine Befestigung der Verbindungseinheit an der Fluidanschlusseinheit auf einem vorteilhaft kleinen Raum um die Drehachse ermöglicht werden, insbesondere da ein Raumbedarf um die Drehachse zu einem Befestigen durch eine Drehung um die Drehachse unabhängig von einer Erstreckung des Verbindungselements und/oder des weiteren Verbindungselements entlang der Längsachse sein kann.

Außerdem wird ein Scheibenwischer mit zumindest einer erfindungsgemäßen Scheibenwischervorrichtung vorgeschlagen. Insbesondere ist der Wischarm über den Wischblattadapter lösbar mit dem Wischblatt verbunden. Vorzugsweise weist der Wischblattadapter zumindest ein Halteelement auf, das zu einer Befestigung des Wischblattadapters am Wischblatt vorgesehen ist. Bevorzugt umfasst der Wischblattadapter zumindest einen anderen Fluidkanal zu einer Leitung des Fluids von der Fluidanschlusseinheit an das Wischblatt und/oder an zumindest ein Fluidausgabeelement des Wischblattadapters. Bevorzugt ist das Fluidausgabeelement beispielsweise als eine Düse ausgebildet. Insbesondere ist das Fluidausgabeelement einteilig mit dem anderen Fluidkanal und/oder dem Wischblattadapter ausgebildet. Vorzugsweise ist das Wischblatt und/oder das Düsenelement dazu vorgesehen, das Fluid zu einer Reinigung der Scheibe auszugeben. Vorzugsweise umfasst der andere Fluidkanal zumindest zwei Fortsätze zumindest zu einer fluidtechnischen Verbindung des Wischblattadapters mit dem Wischblatt, die insbesondere zumindest im Wesentlichen parallel zu einer Haupterstreckungsachse des Wischblatts an dem Wischblattadapter angeordnet sind. Bevorzugt sind der Wischarm, insbesondere ein Wischarmadapter des Wischarms, und der Wischblattadapter über zumindest einen Lagerbolzen des Wischarmadapters drehbar miteinander verbunden. Vorzugsweise weist der Wischarm, insbesondere der Wischarmadapter, zumindest ein Befestigungselement auf, das dazu vorgesehen ist, das Wischblatt in zumindest einer Position relativ zum Wischarm zu halten. Insbesondere ist das Befestigungselement beispielsweise als ein Klemmelement, als ein Federelement o. dgl. ausgebildet. Bevorzugt weist der Wischblattadapter zumindest eine zumindest teilweise rohrförmige Ausnehmung zur Aufnahme des Lagerbolzens auf. Vorzugsweise weist der Wischblattadapter zumindest ein, insbesondere korrespondierend zu dem Befestigungselement des Wischarms, insbesondere des Wischarmadapters, ausgebildetes, weiteres Befestigungselement auf. Es sind aber auch andere Ausgestaltungen des Wischarms, insbesondere des Wischarmadapters, und/oder des Wischblattadapters zu einer Befestigung des Wischblatts an dem Wischarm denkbar. Durch die erfindungsgemäße Ausgestaltung des Scheibenwischers kann eine vorteilhaft einfache und sichere Verbindung des Fluidkanals mit dem Wischblattadapter, insbesondere der Fluidanschlusseinheit, während einer Montage des Wischblatts am Wischarm ermöglicht werden. Es kann eine vorteilhaft schnelle Montage und/oder Demontage des Wischblatts ermöglicht werden. Es kann, insbesondere durch eine durch den Bajonettverschluss befestigte Verbindung der Verbindungseinheit und der Fluidanschlusseinheit, eine vorteilhaft hohe Stabilität erreicht werden. Es kann ein vorteilhaft hoher Bedienkomfort bei einer Montage und/oder Demontage des Wischblatts ermöglicht werden.

Die erfindungsgemäße Scheibenwischervorrichtung und/oder der erfindungsgemäße Scheibenwischer sollen/soll hierbei nicht auf die oben beschriebene Anwendung und Ausführungsform beschränkt sein. Insbesondere können/kann die erfindungsgemäße Scheibenwischervorrichtung und/oder der erfindungsgemäße Scheibenwischer zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Darstellung eines erfindungsgemäßen Scheibenwischers mit einer erfindungsgemäßen Scheibenwischervorrichtung,
- Fig. 2: eine schematische Darstellung eines Ausschnitts des erfindungsgemäßen Scheibenwischers mit der erfindungsgemäßen Scheibenwischervorrichtung mit einer Verbindungseinheit und einem Wischblattadapter der erfindungsgemäßen Scheibenwischervorrichtung in einem befestigten Zustand,
- Fig. 3: eine schematische Darstellung des erfindungsgemäßen Scheibenwischers mit der erfindungsgemäßen Scheibenwischervorrichtung in einem unmontierten Zustand eines Wischarms der erfindungsgemäßen Scheibenwischervorrichtung und in einem unbefestigten Zustand der Verbindungseinheit,
- Fig. 4: eine schematische Darstellung eines Wischblattadapters der erfindungsgemäßen Scheibenwischervorrichtung in einer Draufsicht mit einer Fluidanschlusseinheit des Wischblattadapters,
- Fig. 5: eine schematische Darstellung eines Ausschnitts der erfindungsgemäßen Scheibenwischervorrichtung mit einem Bajonettverschluss der Verbindungseinheit in einem unbefestigten Zustand der Verbindungseinheit,
- Fig. 6: eine schematische Darstellung eines Querschnitts durch die Verbindungseinheit und den Wischblattadapter der erfindungsgemäßen Scheibenwischervorrichtung in einem befestigten Zustand der Verbindungseinheit und
- Fig. 7: eine schematische Darstellung eines Wischblattadapters einer alternativen Ausgestaltung einer erfindungsgemäßen Scheibenwischervorrichtung in einer Draufsicht mit einer Fluidanschlusseinheit des Wischblattadapters.

### Beschreibung der Ausführungsbeispiele

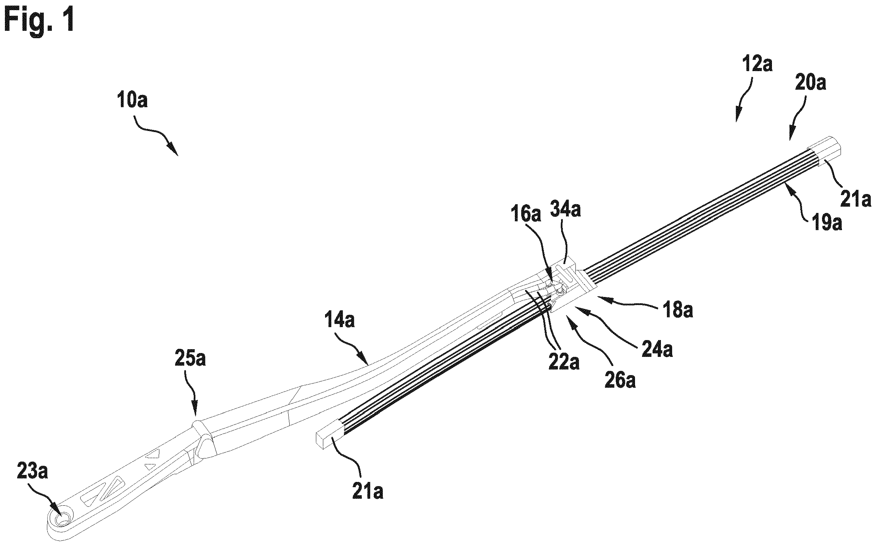

In Figur 1 ist ein Scheibenwischer 10a gezeigt. Der Scheibenwischer 10a ist zu einer Verwendung an einem Kraftfahrzeug vorgesehen. Es sind jedoch auch andere Ausgestaltungen des Scheibenwischers 10a denkbar, insbesondere zu einer Verwendung an einer Scheibenfront und/oder Spiegelflächen eines Gebäudes oder eines anderen statischen Objekts. Der Scheibenwischer 10a umfasst eine Scheibenwischervorrichtung 12a. Die Scheibenwischervorrichtung 12a umfasst einen Wischarm 14a, einen Fluidkanal 22a und einen weiteren Fluidkanal 22a, einen Wischarmadapter 34a, einen Wischblattadapter 18a, eine Verbindungseinheit 16a und ein Wischblatt 20a. Der Fluidkanal 22a und der weitere Fluidkanal 22a weisen einen zumindest im Wesentlichen kreisförmigen Querschnitt auf. Es sind aber auch andere Ausgestaltungen der Fluidkanäle 22a denkbar. Der Wischarm 14a ist über den Wischarmadapter 34a und den Wischblattadapter 18a lösbar mit dem Wischblatt 20a verbunden. Der Wischblattadapter 18a weist eine Fluidanschlusseinheit 24a auf. Das Wischblatt 20a weist eine Wischleisteneinheit 19a auf, die Kanalelemente zur Leitung eines Fluids umfasst, welche in der Figur 1 nicht dargestellt sind. Das Wischblatt 20a weist an zwei Enden entlang einer Haupterstreckungsachse des Wischblatts 20a Wischblattendkappen 21a auf. Der Wischarm 14a ist über ein Gelenk 23a des Wischarms 14a beweglich am Kraftfahrzeug gelagert. Insbesondere ist zumindest der Wischarm 14a zumindest teilweise über ein weiteres Gelenk 25a des Wischarms 14a in eine senkrecht zu einer Haupterstreckungsachse des Wischarms 14a ausgerichteten Richtung beweglich, insbesondere vom Kraftfahrzeug abhebbar, gelagert. Der Fluidkanal 22a und der weitere Fluidkanal 22a sind an dem Wischarm 14a angeordnet, wobei insbesondere der Fluidkanal 22a und der weitere Fluidkanal 22a zumindest größtenteils von dem Wischarm 14a umschlossen sind. Die Verbindungseinheit 16a umfasst ein Verbindungselement 32a und ein weiteres Verbindungselement 33a zur fluidtechnischen Verbindung des Fluidkanals 22a und des weiteren Fluidkanals 22a mit dem Wischblattadapter 18a, insbesondere der Fluidanschlusseinheit 24a des Wischblattadapters 18a, wobei das Verbindungselement 32a und das weitere Verbindungselement 33a einstückig ausgebildet sind und insbesondere in der Figur 1 nicht dargestellt sind. Die Verbindungseinheit 16a ist zur fluidtechnischen Verbindung des Fluidkanals 22a und des weiteren Fluidkanals 22a mit dem Wischblattadapter 18a, insbesondere mit der Fluidanschlusseinheit 24a des Wischblattadapters 18a, vorgesehen. Die Verbindungseinheit 16a ist in der Figur 1 in einem befestigten Zustand gezeigt. Die Verbindungseinheit 16a weist einen Bajonettverschluss 26a auf, mittels dessen der Fluidkanal 22a und der weitere Fluidkanal 22a an dem Wischblattadapter 18a, insbesondere an der Fluidanschlusseinheit 24a des Wischblattadapters 18a, befestigbar ist.

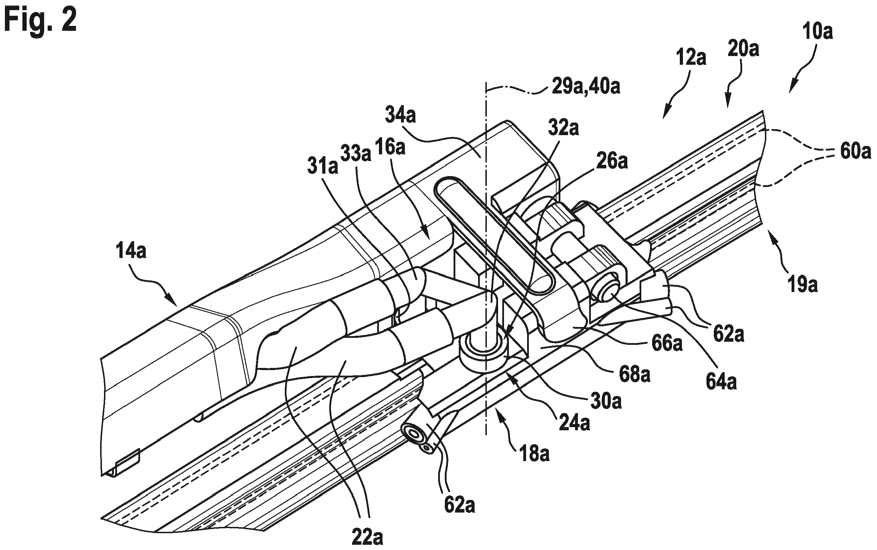

Die Figur 2 zeigt einen Ausschnitt des Scheibenwischers 10a im Bereich des Wischblattadapters 18a in einem montierten Zustand des Wischarms 14a. Der Wischarm 14a ist über den Wischarmadapter 34a an dem Wischblattadapter 18a befestigt. Vorzugsweise weist der Wischblattadapter 18a zumindest ein Halteelement auf, das zu einer Befestigung des Wischblattadapters 18a am Wischblatt 20a vorgesehen ist. Bevorzugt umfasst der Wischblattadapter 18a zumindest zwei andere Fluidkanäle 60a zu einer Leitung des Fluids von der Fluidanschlusseinheit 24a an das Wischblatt 20a. Die Fluidanschlusseinheit 24a umfasst ein Fluidanschlusselement 30a und ein weiteres Fluidanschlusselement 31a, die, insbesondere fluidtechnisch, jeweils mit einem der anderen Fluidkanäle 60a verbunden sind. Der Wischblattadapter 18a weist eine Vielzahl von Fluidausgabeelementen 62 auf, welche fluidtechnisch mit den anderen Fluidkanälen 60a verbunden sind. Es ist denkbar, dass die Fluidausgabeelemente 62a jeweils als eine Düse, als eine Öffnung o. dgl. ausgebildet sind. Insbesondere sind die Fluidausgabeelemente 62a einteilig mit einem der anderen Fluidkanäle 60a und/oder dem Wischblattadapter 18a ausgebildet. Vorzugsweise sind/ist das Wischblatt 20a und/oder die Fluidausgabeelemente 62a dazu vorgesehen, das Fluid zu einer Reinigung der Scheibe auszugeben. Es sind jedoch auch andere Ausgestaltungen des Wischblattadapters 18a, insbesondere der Fluidausgabeelemente 62a, denkbar. Der Wischarm 14a, insbesondere der Wischarmadapter 34a, und der Wischblattadapter 18a sind über zumindest einen Lagerbolzen 64a des Wischarmadapters 34a drehbar miteinander verbunden. Der Wischarm 14a, insbesondere der Wischarmadapter 34a, weist zumindest ein Befestigungselement 66a auf, das dazu vorgesehen ist, das Wischblatt 20a in zumindest einer Position relativ zum Wischarm 14a zu halten. Insbesondere ist das Befestigungselement 66a als ein Klemmelement ausgebildet. Der Wischblattadapter 18a weist zumindest eine zumindest teilweise rohrförmige Ausnehmung zur Aufnahme des Lagerbolzens 64a auf. Der Wischblattadapter 18a weist zumindest ein, insbesondere korrespondierend zu dem Befestigungselement 66a des Wischarms 14a, insbesondere des Wischarmadapters 34a, ausgebildetes, weiteres Befestigungselement 68a auf, welches insbesondere einteilig mit einem Grundkörper des Wischblattadapters 18a ausgebildet ist. Es sind aber auch andere Ausgestaltungen des Wischarms 14a, insbesondere des Wischarmadapters 34a, und/oder des Wischblattadapters 18a zu einer Befestigung des Wischblatts 20a an dem Wischarm 14a denkbar. Der Fluidkanal 22a und der weitere Fluidkanal 22a sind über die Verbindungseinheit 16a mit dem Wischblattadapter 18a, insbesondere der Fluidanschlusseinheit 24a, fluidtechnisch verbunden. Der Bajonettverschluss 26a ist dazu vorgesehen, den Fluidkanal 22a und den weiteren Fluidkanal 22a an dem Wischblattadapter 18a, insbesondere der Fluidanschlusseinheit 24a, zu befestigen. In Figur 2 ist die Verbindungseinheit 16a, insbesondere der Bajonettverschluss 26a in einem befestigten Zustand gezeigt. Die Verbindungseinheit 16a weist eine Verbindungsachse 40a auf, die zumindest im Wesentlichen senkrecht zu einer zumindest im Wesentlichen parallel zu einer Haupterstreckungsachse des Lagerbolzens 64a ausgerichteten Achse durch die Verbindungseinheit 16a angeordnet ist. Vorzugsweise ist die Verbindungseinheit 16a dazu vorgesehen, über eine entlang der Verbindungsachse 40a ausgerichteten Bewegung mit der Fluidanschlusseinheit 24a verbunden zu werden. Der Bajonettverschluss 26a weist eine Drehachse 29a auf, die in der Verbindungsachse 40a angeordnet ist. Vorzugsweise ist der Bajonettverschluss 26a dazu vorgesehen, zumindest über eine Drehbewegung um die Drehachse 29a, die Verbindungseinheit 16a mit der Fluidanschlusseinheit 24a zu verbinden.

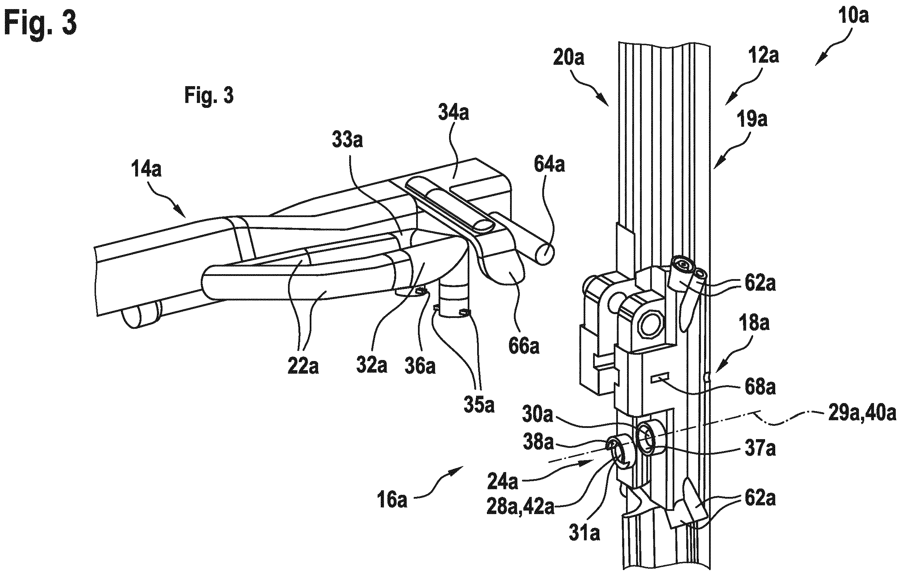

Die Figur 3 zeigt eine schematische Darstellung des Scheibenwischers 10a mit der Scheibenwischervorrichtung 12a in einem unmontierten Zustand des Wischarms 14a und/oder des Wischblattadapters 18a und des Wischblatts 20a. Die Verbindungseinheit 16a ist in einem unbefestigten Zustand, insbesondere getrennt von der Fluidanschlusseinheit 24a, gezeigt. Der Bajonettverschluss 26a weist zwei Bajonettverschlusselemente 35a, zwei weitere Bajonettverschlusselemente 36a, ein Bajonettgegenverschlusselement 37a und ein weiteres Bajonettgegenverschlusselement 38a auf. Die zwei Bajonettverschlusselemente 35a sind über das Verbindungselement 32a an dem Fluidkanal 22a angeordnet. Die zwei weiteren Bajonettverschlusselemente 36a sind über das weitere Verbindungselement 33a an dem weiteren Fluidkanal 22a angeordnet. Die zwei Bajonettverschlusselemente 35a sind als Fortsatz ausgebildet und in einem wischblattseitigen, insbesondere fluidanschlussseitigen, Endbereich des Verbindungselements 32a am Verbindungselement 32a angeordnet. Die zwei weiteren Bajonettverschlusselemente 36a sind als Fortsatz ausgebildet und in einem wischblattseitigen, insbesondere fluidanschlussseitigen, Endbereich des weiteren Verbindungselements 33a am weiteren Verbindungselement 33a angeordnet. Das Bajonettgegenverschlusselement 37a ist an dem Fluidanschlusselement 30a der Fluidanschlusseinheit 24a des Wischblattadapters 18a angeordnet und insbesondere einstückig mit dem Wischblattadapter 18a ausgebildet. Das weitere Bajonettgegenverschlusselement 38a ist an dem weiteren Fluidanschlusselement 31a der Fluidanschlusseinheit 24a des Wischblattadapters 18a angeordnet und insbesondere einstückig mit dem Wischblattadapter 18a ausgebildet. Die zwei Bajonettverschlusselemente 35a sind in zumindest einer Schnittebene des Verbindungselements 32a gleichmäßig verteilt an einer Grundform, insbesondere um eine Grundform, des Verbindungselements 32a angeordnet. Die zwei weiteren Bajonettverschlusselemente 35a sind in zumindest einer Schnittebene des weiteren Verbindungselements 33a gleichmäßig verteilt an einer Grundform, insbesondere um eine Grundform, des weiteren Verbindungselements 33a angeordnet. Das Verbindungselement 32a weist in zumindest einem befestigten Zustand der Verbindungseinheit 16a eine Längsachse auf, die gleich der Drehachse 29a des Bajonettverschlusses 26a ist. Es sind jedoch auch andere Ausgestaltungen des Bajonettverschlusses 26a denkbar.

Die Verbindungseinheit 16a weist ein Führungselement 28a auf, das eine teilweise geöffnete Führungsbahn bildet. Das Führungselement 28a ist an dem weiteren Fluidanschlusselement 31a angeordnet. Das Führungselement 28a ist dazu vorgesehen, zumindest das weitere Verbindungselement 33a der Verbindungseinheit 16a bei einem Befestigen des weiteren Fluidkanals 22a zu führen. Das Führungselement 28a weist in zumindest einer zumindest im Wesentlichen senkrecht zur Verbindungsachse 40a und/oder zur Drehachse 29a ausgerichteten Ebene durch das Führungselement 28a eine kreisringsegmentförmige Grundform auf, die über einen Winkel von 180° ausgebildet ist. Das Führungselement 28a ist zumindest teilweise um eine zumindest im Wesentlichen parallel zur Verbindungsachse 40a und/oder zur Drehachse 29a ausgerichteten Mittelachse des weiteren Fluidanschlusselements 31a angeordnet, welche in der Figur 3 nicht dargestellt ist. Das Fluidanschlusselement 30a und das Verbindungselement 32a sind in einem befestigten Zustand der Verbindungseinheit 16a um die Drehachse 29a und die Verbindungsachse 40a angeordnet. Das weitere Fluidanschlusselement 31a und das weitere Verbindungselement 33a sind in einem befestigten Zustand der Verbindungseinheit 16a beabstandet von der Drehachse 29a des Bajonettverschlusses 26a angeordnet. Das Führungselement 28a weist einen Klemmfortsatz 42a auf, der dazu vorgesehen ist, die zwei weiteren Bajonettverschlusselemente 36a des Bajonettverschlusses 26a, welche an dem weiteren Verbindungselement 33a angeordnet sind, in zumindest einem befestigten Zustand des weiteren Fluidkanals 22a an dem Wischblattadapter 18a, insbesondere dem weiteren Fluidanschlusselement 31a der Fluidanschlusseinheit 24a, mit einer Klemmkraft zu beaufschlagen. Es sind jedoch auch andere Ausgestaltungen des Führungselements 28a denkbar.

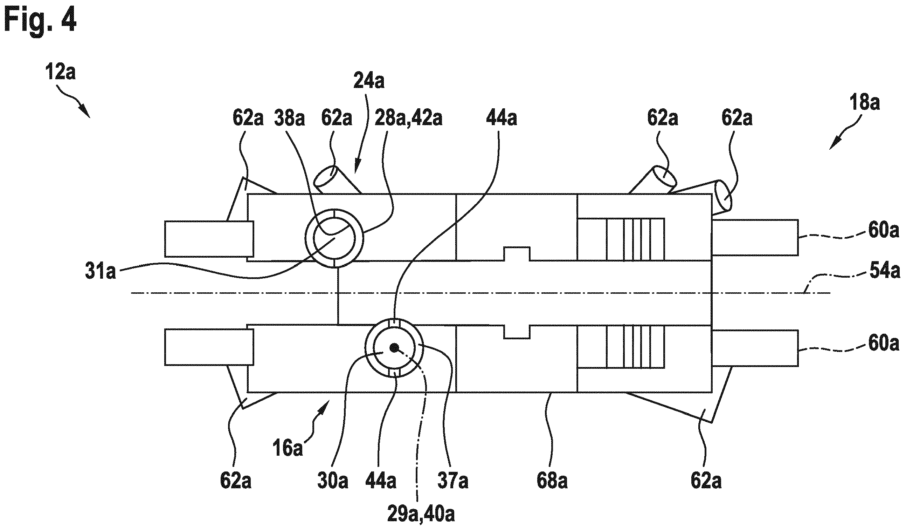

Die Figur 4 zeigt eine schematische Darstellung des Wischblattadapters 18a der Scheibenwischervorrichtung 12a in einer Draufsicht. Das Bajonettgegenverschlusselement 37a weist zwei Aufnahmeöffnungen 44a zur Aufnahme der zwei Bajonettverschlusselemente 36a bei einem Befestigen des Fluidkanals 22a, insbesondere über das Verbindungselement 32a, an dem Wischblattadapter 18a, auf. Die Aufnahmeöffnungen 44a sind in zumindest einer Schnittebene des Bajonettgegenverschlusselements 37a gleichmäßig verteilt an dem Bajonettgegenverschlusselement 37a angeordnet. Die Aufnahmeöffnungen 44a sind, korrespondierend zu einer Anordnung der Bajonettverschlusselemente 35a an dem Verbindungselement 32a, an dem Bajonettgegenverschlusselement 37a angeordnet. Die Aufnahmeöffnungen 44a weisen in zumindest einer zumindest im Wesentlichen senkrecht zu der Verbindungsachse 40a und der Drehachse 29a ausgerichteten Schnittebene des Bajonettgegenverschlusselements 37a eine zumindest im Wesentlichen rechteckige Grundform auf. Das Bajonettgegenverschlusselement 37a und das weitere Bajonettgegenverschlusselement 38a sind entlang zumindest einer zumindest im Wesentlichen parallel zu einer Haupterstreckungsachse 54a des Wischblattadapters 18a ausgerichteten Achse betrachtet versetzt zueinander an dem Wischblattadapter 18a angeordnet. Das Bajonettgegenverschlusselement 37a und das weitere Bajonettgegenverschlusselement 38a sind entlang zumindest einer zumindest im Wesentlichen senkrecht zu der Haupterstreckungsachse 54a des Wischblattadapters 18a ausgerichteten Achse betrachtet versetzt zueinander an dem Wischblattadapter 18a angeordnet.

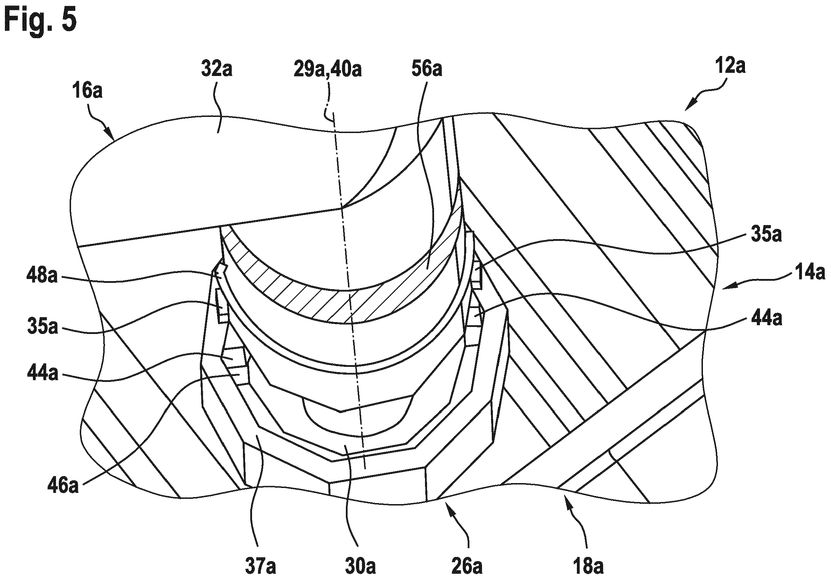

Die Figur 5 zeigt eine schematische Darstellung eines Ausschnitts der Scheibenwischervorrichtung 12a im Bereich des Verbindungselements 32a und des Fluidanschlusselements 30a in einem unbefestigten Zustand der Verbindungseinheit 16a. Die Verbindungseinheit 16a weist ein als Dichtungsring ausgebildetes Dichtungselement 48a auf. Das Dichtungselement 48a ist um die Verbindungsachse 40a und die Drehachse 29a an dem Verbindungselement 32a und zumindest teilweise an dem Bajonettverschluss 26a angeordnet. Es sind jedoch auch andere Ausgestaltungen des Dichtungselements 48a denkbar, insbesondere als Push-Fit-Element und/oder als ein Film aus einem, insbesondere chemischen, Dichtungsmittel. Bevorzugt ist das Dichtungselement 48a dazu vorgesehen, die Verbindung zwischen der Verbindungseinheit 16a und dem Wischblattadapter 18a, insbesondere der Fluidanschlusseinheit 24a, gegen ein Austreten des Fluids abzudichten. Die Verbindungseinheit 16a weist ein weiteres Dichtungselement 48a auf, welches an dem weiteren Verbindungselement 33a angeordnet ist, wobei das weitere Dichtungselement 48a in der Figur 5 nicht dargestellt ist. Der Bajonettverschluss 26a weist ein Federelement 46a auf, wobei das Federelement 46a dazu vorgesehen ist, die zwei Bajonettverschlusselemente 35a in zumindest einem befestigten Zustand der Verbindungseinheit 16a mit einer Federkraft zu beaufschlagen. Insbesondere ist die Federkraft in Richtung des Bajonettgegenverschlusselements 37a gerichtet. Das Federelement 46a ist als Spiralfeder ausgebildet und um die Drehachse 29a an dem Bajonettgegenverschlusselement 37a angeordnet. Es sind jedoch auch andere Ausgestaltungen des Federelements 46a denkbar. Es ist denkbar, dass die Verbindungseinheit 16a zumindest ein Griffelement 56a aufweist. Vorzugsweise ist das Griffelement 56a zumindest teilweise an dem Bajonettverschluss 26a und/oder einem Verbindungselement 32a, 33a der Verbindungseinheit 16a angeordnet. Das Griffelement 56a weist eine Betätigungsfläche mit einer zumindest teilweise angerauten Oberfläche auf. Es ist aber auch denkbar, dass das Griffelement 56a, insbesondere die Betätigungsfläche, zumindest teilweise gerippt und/oder gerändelt ausgebildet ist. Es sind aber auch andere Ausgestaltungen des Griffelements 56a denkbar.

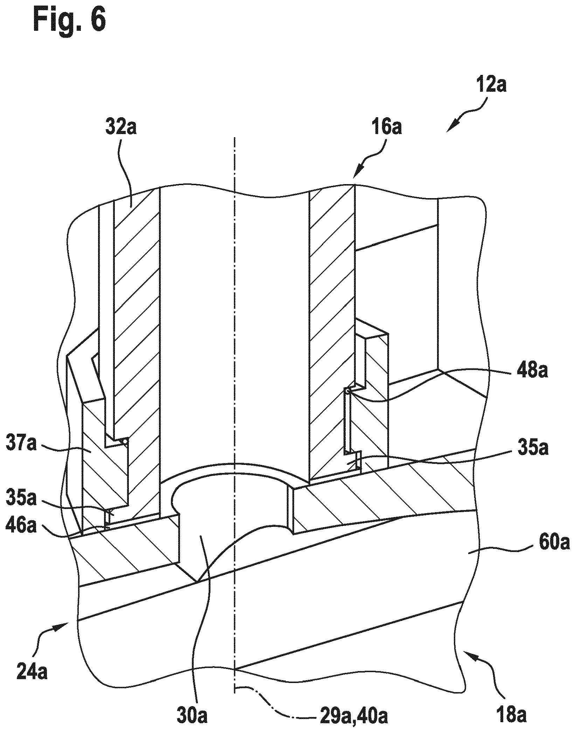

In der Figur 6 ist eine schematische Darstellung eines Querschnitts durch die Verbindungseinheit 16a und die Fluidanschlusseinheit 24a in einem befestigten Zustand der Verbindungseinheit 16a gezeigt. Die zwei Bajonettverschlusselemente 35a sind an dem Bajonettgegenverschlusselement 37a angeordnet und halten das Verbindungselement 32a gegen zumindest eine zumindest im Wesentlichen parallel zur Verbindungsachse 40a ausgerichteten Bewegung relativ zum Wischblattadapter 18a. Der in der Figur 6 gezeigte Querschnitt ist im Bereich des Verbindungselements 32a und des Fluidanschlusselements 30a gezeigt. Ein Bereich des weiteren Verbindungselements 33a und des weiteren Fluidanschlusselements 31a ist mit Ausnahme der Drehachse 29a identisch zu dem in der Figur 6 gezeigten Bereich ausgebildet.

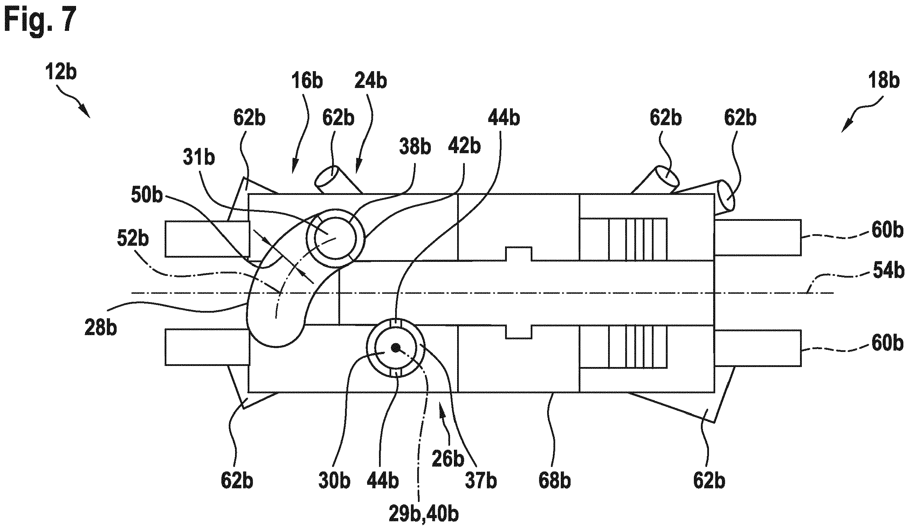

In der Figur 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In dem Ausführungsbeispiel der Figur 7 ist der Buchstabe a durch den Buchstaben b ersetzt.

Die Figur 7 zeigt eine schematische Darstellung eines Wischblattadapters 18b einer alternativen Ausgestaltung einer Scheibenwischervorrichtung 12b in einer Draufsicht. Die Scheibenwischervorrichtung 12b weist einen Wischarm 14b, einen am Wischarm 14b angeordneten Fluidkanal 22b, einen weiteren am Wischarm 14b angeordneten Fluidkanal 22b, und den Wischblattadapter 18b auf, wobei insbesondere der Wischarm 14b, der Fluidkanal 22b und der weitere Fluidkanal 22b in der Figur 7 nicht dargestellt sind. Die in der Figur 7 dargestellte Scheibenwischervorrichtung 12b weist eine zumindest im Wesentlichen analoge Ausgestaltung zu der in der Beschreibung der Figuren 1 bis 6 beschriebenen Scheibenwischervorrichtung 12a auf, so dass bezüglich einer Ausgestaltung der in der Figur 7 dargestellten Scheibenwischervorrichtung 12b zumindest im Wesentlichen auf die Beschreibung der Figuren 1 bis 6 verwiesen werden kann. Im Unterschied zu der in der Beschreibung der Figuren 1 bis 6 beschriebenen Scheibenwischervorrichtung 12a weist die in der Figur 7 dargestellte Scheibenwischervorrichtung 12b vorzugsweise eine Verbindungseinheit 16b auf, die ein Führungselement 28b umfasst, welches zumindest teilweise an einem weiteren Fluidanschlusselement 31 einer Fluidanschlusseinheit 24b angeordnet ist. Das Führungselement 28b bildet eine geschlossene Führungsbahn, die in zumindest einer Schnittebene des weiteren Fluidanschlusselements 31b zumindest im Wesentlichen vollständig um das weitere Fluidanschlusselement 31b ausgebildet ist. Die geschlossene Führungsbahn des Führungselements 28b ist derart ausgebildet, dass die geschlossene Führungsbahn in zumindest einer Schnittebene der Führungsbahn in einem zumindest im Wesentlichen gleichbleibenden Abstand 50b um ein virtuelles Kreissegment 52b verläuft, wobei zumindest ein Ende des virtuellen Kreissegments 52b auf der zumindest im Wesentlichen senkrecht zu einer Verbindungsachse 40b der Verbindungseinheit 16a und zu einer Drehachse 29b eines Bajonettverschlusses 26b der Verbindungseinheit 16b ausgerichteten Mittelachse des weiteren Fluidanschlusselements 31b angeordnet ist. Mittels des Bajonettverschlusses 26b ist der Fluidkanal 22b und der weitere Fluidkanal 22b an dem Wischblattadapter 18b, insbesondere an der Fluidanschlusseinheit 24b des Wischblattadapters 18b, befestigbar. Das virtuelle Kreissegment 52b ist zumindest teilweise um die Drehachse 29b angeordnet. Bevorzugt ist das Führungselement 28b dazu vorgesehen, falls ein Verbindungselement 32b der Verbindungseinheit 16b mittels des Bajonettverschlusses 26b an einem Fluidanschlusselement 30b der Fluidanschlusseinheit 24b befestigt wird, ein weiteres Verbindungselement 33b der Verbindungseinheit 16b zu führen, wobei das Verbindungselement 32b und das weitere Verbindungselement 33b in der Figur 7 nicht dargestellt sind. Der Bajonettverschluss 26b weist ein weiteres Bajonettgegenverschlusselement 38b auf, welches an dem weiteren Fluidanschlusselement 31b und dem Führungselement 28b angeordnet ist. Vorzugsweise weist der Bajonettverschluss 26b zwei weitere Bajonettverschlusselemente 36b auf, welche in der Figur 7 nicht dargestellt sind. Die zwei weiteren Bajonettverschlusselemente 36b sind an dem weiteren Verbindungselement 33b angeordnet. Bevorzugt sind die zwei weiteren Bajonettverschlusselemente 36b dazu vorgesehen, das weitere Verbindungselement 33b, insbesondere bei oder nach einer Führung des weiteren Verbindungselements 33b an dem Führungselement 28b, durch ein Ineinandergreifen mit dem weiteren Bajonettgegenverschlusselement 38b an dem weiteren Fluidanschlusselement 31b zu befestigen. Das Führungselement 28b weist zumindest einen Klemmfortsatz 42b auf, der dazu vorgesehen ist, die zwei weiteren Bajonettverschlusselemente 36b des Bajonettverschlusses 26b in zumindest einem befestigten Zustand des Fluidkanals 22b an dem Wischblattadapter 18b mit einer Klemmkraft zu beaufschlagen. Der Bajonettverschluss 26b weist zwei Bajonettverschlusselemente 35b und ein Bajonettgegenverschlusselement 37b auf, wobei die zwei Bajonettverschlusselemente 35b, 36b in der Figur 7 nicht dargestellt sind. Das Bajonettgegenverschlusselement 37b umfasst zwei Aufnahmeöffnungen 44b zur Aufnahme der Bajonettverschlusselemente 35b bei einem Befestigen des Fluidkanals 22b an dem Wischblattadapter 18b. Das Bajonettgegenverschlusselement 37b und das weitere Bajonettgegenverschlusselement 38b sind entlang zumindest einer zumindest im Wesentlichen parallel zu einer Haupterstreckungsachse 54b des Wischblattadapters 18b ausgerichteten Achse betrachtet versetzt zueinander an dem Wischblattadapter 18b angeordnet.

## Patentansprüche

1. Scheibenwischervorrichtung mit zumindest einem Wischblattadapter (18a; 18b), mit zumindest einem Wischarm (14a; 14b), mit zumindest einem am Wischarm (14a; 14b) angeordneten Fluidkanal (22a; 22b) und mit zumindest einer Verbindungseinheit (16a; 16b) zur fluidtechnischen Verbindung des Fluidkanals (22a; 22b) mit dem Wischblattadapter (18a; 18b), insbesondere mit einer Fluidanschlusseinheit (24a; 24b) des Wischblattadapters (18a; 18b), **dadurch gekennzeichnet, dass** die Verbindungseinheit (16a; 16b) zumindest einen Bajonettverschluss (26a; 26b) aufweist, mittels dessen der Fluidkanal (22a; 22b) an dem Wischblattadapter (18a; 18b), insbesondere an der Fluidanschlusseinheit (24a; 24b) des Wischblattadapters (18a; 18b), befestigbar ist,
wobei die Verbindungseinheit (16a; 16b) zumindest ein Führungselement (28a; 28b) aufweist, das eine, insbesondere zumindest teilweise geöffnete, Führungsbahn bildet, die dazu vorgesehen ist, zumindest ein Verbindungselement (33a; 33b) der Verbindungseinheit (16a; 16b) bei einem Befestigen des Fluidkanals (22a; 22b) an dem Wischblattadapter (18a; 18b) zu führen, oder
wobei die Verbindungseinheit (16a) zumindest ein Dichtungselement (48a) aufweist, welches zumindest teilweise an dem Bajonettverschluss (26a), insbesondere an einem Verbindungselement (32a, 33a) der Verbindungseinheit (16a), angeordnet ist.

2. Scheibenwischervorrichtung nach Anspruch 1, **dadurch gekennzeichnet, dass** der Bajonettverschluss (26a) zumindest ein Bajonettverschlusselement (35a, 36a) und zumindest ein Bajonettgegenverschlusselement (37a, 38a) aufweist, wobei das Bajonettverschlusselement (35a, 36a), insbesondere über ein Verbindungselement (32a, 33a) der Verbindungseinheit (16a), an dem Fluidkanal (22a) angeordnet ist und das Bajonettgegenverschlusselement (37a, 38a) an dem Wischblattadapter (18a), insbesondere der Fluidanschlusseinheit (24a), angeordnet ist.

3. Scheibenwischervorrichtung nach Anspruch 1 oder 2, **dadurch gekennzeichnet, dass** der Bajonettverschluss (26a) zumindest ein Bajonettverschlusselement (35a; 36a), zumindest ein Bajonettgegenverschlusselement (37a, 38a) und zumindest ein Federelement (46a) aufweist, wobei das Federelement (46a) dazu vorgesehen ist, das Bajonettverschlusselement (35a; 36a) und/oder das Bajonettgegenverschlusselement (37a, 38a) in zumindest einem befestigten Zustand der Verbindungseinheit (16a) mit einer Federkraft zu beaufschlagen.

4. Scheibenwischervorrichtung nach einem der vorhergehenden Ansprüche, **dadurch gekennzeichnet, dass** die Verbindungseinheit (16a; 16b) zumindest ein Führungselement (28a; 28b) aufweist, das eine, insbesondere zumindest teilweise geöffnete, Führungsbahn bildet, wobei das Führungselement (28a; 28b) zumindest einen Klemmfortsatz (42a; 42b) aufweist, der dazu vorgesehen ist, zumindest ein Bajonettverschlusselement (36a; 36b) des Bajonettverschlusses (26a; 26b) in zumindest einem befestigten Zustand des Fluidkanals (22a; 22b) an dem Wischblattadapter (18a; 18b) mit einer Klemmkraft zu beaufschlagen.

5. Scheibenwischervorrichtung nach einem der vorhergehenden Ansprüche, **dadurch gekennzeichnet, dass** der Bajonettverschluss (26a; 26b) zumindest zwei Bajonettverschlusselemente (35a, 36a; 35b, 36b) und zumindest ein Bajonettgegenverschlusselement (37a, 38a; 37b, 38b) aufweist, welches zumindest zwei Aufnahmeöffnungen (44a; 44b) zur Aufnahme der Bajonettverschlusselemente (35a, 36a; 35b, 36b) bei einem Befestigen des Fluidkanals (22a; 22b) an dem Wischblattadapter (18a; 18b) umfasst.

6. Scheibenwischervorrichtung nach einem der vorhergehenden Ansprüche, **dadurch gekennzeichnet, dass** der Bajonettverschluss (26a; 26b) zumindest ein Bajonettgegenverschlusselement (37a; 37b) und zumindest ein weiteres Bajonettgegenverschlusselement (38a; 38b) aufweist, wobei das Bajonettgegenverschlusselement (37a; 37b) und das weitere Bajonettgegenverschlusselement (38a; 38b) entlang zumindest einer zumindest im Wesentlichen parallel zu einer Haupterstreckungsachse (54a; 54b) des Wischblattadapters (18a; 18b) ausgerichteten Achse betrachtet versetzt zueinander an dem Wischblattadapter (18a; 18b) angeordnet sind.

7. Scheibenwischervorrichtung nach einem der vorhergehenden Ansprüche, **dadurch gekennzeichnet, dass** die Verbindungseinheit (16a) zumindest ein mit dem Fluidkanal (22a) verbundenes Verbindungselement (32a) aufweist an dem zumindest ein Bajonettverschlusselement (35a) des Bajonettverschlusses (26a) angeordnet ist, wobei in zumindest einem befestigten Zustand der Verbindungseinheit (16a) eine Längsachse des Verbindungselements (32a) gleich einer Drehachse (29a) des Bajonettverschlusses (26a) ist.

8. Scheibenwischer mit zumindest einer Scheibenwischervorrichtung (12a; 12b) nach einem der vorhergehenden Ansprüche.

## Claims

1. Windscreen wiper device having at least one wiper blade adapter (18a; 18b), having at least one wiper arm (14a; 14b), having at least one fluid channel (22a; 22b) arranged on the wiper arm (14a; 14b), and having at least one connecting unit (16a; 16b) for the fluidic connection of the fluid channel (22a; 22b) to the wiper blade adapter (18a; 18b), in particular to a fluid connection unit (24a; 24b) of the wiper blade adapter (18a; 18b), **characterized in that** the connecting unit (16a; 16b) has at least one bayonet closure (26a; 26b), by means of which the fluid channel (22a; 22b) is fastenable to the wiper blade adapter (18a; 18b), in particular to the fluid connection unit (24a; 24b) of the wiper blade adapter (18a; 18b), wherein the connecting unit (16a; 16b) has at least one guide element (28a; 28b) which forms an, in particular at least partially open, guide track which is provided for guiding at least one connecting element (33a; 33b) of the connecting unit (16a; 16b) when the fluid channel (22a; 22b) is fastened to the wiper blade adapter (18a; 18b), or
wherein the connecting unit (16a) has at least one sealing element (48a) which is at least partially arranged on the bayonet closure (26a), in particular on a connecting element (32a, 33a) of the connecting unit (16a) .

2. Windscreen wiper device according to Claim 1, **characterized in that** the bayonet closure (26a) has at least one bayonet closure element (35a, 36a) and at least one bayonet mating closure element (37a, 38a), wherein the bayonet closure element (35a, 36a) is arranged on the fluid channel (22a), in particular via a connecting element (32a, 33a) of the connecting unit (16a), and the bayonet mating closure element (37a, 38a) is arranged on the wiper blade adapter (18a), in particular on the fluid connection unit (24a).

3. Windscreen wiper device according to Claim 1 or 2, **characterized in that** the bayonet closure (26a) has at least one bayonet closure element (35a; 36a), at least one bayonet mating closure element (37a, 38a) and at least one spring element (46a), wherein the spring element (46a) is provided to act upon the bayonet closure element (35a; 36a) and/or the bayonet mating closure element (37a, 38a) with a spring force in at least one fastened state of the connecting unit (16a).

4. Windscreen wiper device according to one of the preceding claims, **characterized in that** the connecting unit (16a; 16b) has at least one guide element (28a; 28b) which forms an, in particular at least partially open, guide track, wherein the guide element (28a; 28b) has at least one clamping extension (42a; 42b) which is provided to act upon at least one bayonet closure element (36a; 36b) of the bayonet closure (26a; 26b) with a clamping force in at least one fastened state of the fluid channel (22a; 22b) to the wiper blade adapter (18a; 18b).

5. Windscreen wiper device according to one of the preceding claims, **characterized in that** the bayonet closure (26a; 26b) has at least two bayonet closure elements (35a, 36a; 35b, 36b) and at least one bayonet mating closure element (37a, 38a; 37b, 38b) which comprises at least two receiving openings (44a; 44b) for receiving the bayonet closure elements (35a, 36a; 35b, 36b) when the fluid channel (22a; 22b) is fastened to the wiper blade adapter (18a; 18b).

6. Windscreen wiper device according to one of the preceding claims, **characterized in that** the bayonet closure (26a; 26b) has at least one bayonet mating closure element (37a; 37b) and at least one further bayonet mating closure element (38a; 38b), wherein the bayonet mating closure element (37a; 37b) and the further bayonet mating closure element (38a; 38b) are arranged on the wiper blade adapter (18a; 18b) offset to one another, as seen along at least one axis oriented at least substantially parallel to a main axis of extent (54a; 54b) of the wiper blade adapter (18a; 18b).

7. Windscreen wiper device according to one of the preceding claims, **characterized in that** the connecting unit (16a) has at least one connecting element (32a) which is connected to the fluid channel (22a) and on which at least one bayonet closure element (35a) of the bayonet closure (26a) is arranged, wherein, in at least one fastened state of the connecting unit (16a), a longitudinal axis of the connecting element (32a) is identical to an axis of rotation (29a) of the bayonet closure (26a).

8. Windscreen wiper having at least one windscreen wiper device (12a; 12b) according to one of the preceding claims.

## Revendications

1. Dispositif d'essuie-glace avec au moins un adaptateur de balai d'essuie-glace (18a ; 18b), avec au moins un bras d'essuie-glace (14a ; 14b), avec au moins un canal de fluide (22a ; 22b) agencé sur le bras d'essuie-glace (14a ; 14b) et avec au moins une unité de liaison (16a ; 16b) pour la liaison fluidique du canal de fluide (22a ; 22b) avec l'adaptateur de balai d'essuie-glace (18a ; 18b), notamment avec une unité de raccordement de fluide (24a ; 24b) de l'adaptateur de balai d'essuie-glace (18a ; 18b), **caractérisé en ce que** l'unité de liaison (16a ; 16b) présente au moins une fermeture à baïonnette (26a ; 26b) au moyen de laquelle le canal de fluide (22a ; 22b) peut être fixé à l'adaptateur de balai d'essuie-glace (18a ; 18b), notamment à l'unité de raccordement de fluide (24a ; 24b) de l'adaptateur de balai d'essuie-glace (18a ; 18b), l'unité de liaison (16a ; 16b) présentant au moins un élément de guidage (28a ; 28b) qui forme une voie de guidage, notamment au moins partiellement ouverte, qui est prévue pour guider au moins un élément de liaison (33a ; 33b) de l'unité de liaison (16a ; 16b) lors d'une fixation du canal de fluide (22a ; 22b) à l'adaptateur de balai d'essuie-glace (18a ; 18b), ou
l'unité de liaison (16a) présentant au moins un élément d'étanchéité (48a) qui est agencé au moins partiellement sur la fermeture à baïonnette (26a), notamment sur un élément de liaison (32a, 33a) de l'unité de liaison (16a) .

2. Dispositif d'essuie-glace selon la revendication 1, **caractérisé en ce que** la fermeture à baïonnette (26a) présente au moins un élément de fermeture à baïonnette (35a, 36a) et au moins un contre-élément de fermeture à baïonnette (37a, 38a), l'élément de fermeture à baïonnette (35a, 36a), notamment par l'intermédiaire d'un élément de liaison (32a, 33a) de l'unité de liaison (16a), étant agencé sur le canal de fluide (22a) et le contre-élément de fermeture à baïonnette (37a, 38a) étant agencé sur l'adaptateur de balai d'essuie-glace (18a), notamment l'unité de raccordement de fluide (24a).

3. Dispositif d'essuie-glace selon la revendication 1 ou 2, **caractérisé en ce que** la fermeture à baïonnette (26a) présente au moins un élément de fermeture à baïonnette (35a ; 36a), au moins un contre-élément de fermeture à baïonnette (37a, 38a) et au moins un élément de ressort (46a), l'élément de ressort (46a) étant prévu pour solliciter avec une force de ressort l'élément de fermeture à baïonnette (35a ; 36a) et/ou le contre-élément de fermeture à baïonnette (37a, 38a) dans au moins un état fixé de l'unité de liaison (16a).

4. Dispositif d'essuie-glace selon l'une quelconque des revendications précédentes, **caractérisé en ce que** l'unité de liaison (16a ; 16b) présente au moins un élément de guidage (28a ; 28b) formant une voie de guidage, notamment au moins partiellement ouverte, l'élément de guidage (28a ; 28b) présentant au moins un prolongement de serrage (42a ; 42b) qui est prévu pour solliciter avec une force de serrage au moins un élément de fermeture à baïonnette (36a ; 36b) de la fermeture à baïonnette (26a ; 26b) dans au moins un état fixé du canal de fluide (22a ; 22b) sur l'adaptateur de balai d'essuie-glace (18a ; 18b).

5. Dispositif d'essuie-glace selon l'une quelconque des revendications précédentes, **caractérisé en ce que** la fermeture à baïonnette (26a ; 26b) présente au moins deux éléments de fermeture à baïonnette (35a, 36a ; 35b, 36b) et au moins un contre-élément de fermeture à baïonnette (37a, 38a ; 37b, 38b) qui comprend au moins deux ouvertures de réception (44a ; 44b) pour recevoir les éléments de fermeture à baïonnette (35a, 36a ; 35b, 36b) lors d'une fixation du canal de fluide (22a ; 22b) sur l'adaptateur de balai d'essuie-glace (18a ; 18b).

6. Dispositif d'essuie-glace selon l'une quelconque des revendications précédentes, **caractérisé en ce que** la fermeture à baïonnette (26a ; 26b) présente au moins un contre-élément de fermeture à baïonnette (37a ; 37b) et au moins un autre contre-élément de fermeture à baïonnette (38a ; 38b), le contre-élément de fermeture à baïonnette (37a ; 37b) et l'autre contre-élément de fermeture à baïonnette (38a ; 38b) étant agencés en décalage l'un par rapport à l'autre sur l'adaptateur de balai d'essuie-glace (18a ; 18b), considérés le long d'au moins un axe orienté au moins essentiellement parallèlement à un axe d'extension principal (54a ; 54b) de l'adaptateur de balai d'essuie-glace (18a ; 18b).

7. Dispositif d'essuie-glace selon l'une quelconque des revendications précédentes, **caractérisé en ce que** l'unité de liaison (16a) présente au moins un élément de liaison (32a) relié au canal de fluide (22a) sur lequel au moins un élément de fermeture à baïonnette (35a) de la fermeture à baïonnette (26a) est agencé ; dans au moins un état fixé de l'unité de liaison (16a), un axe longitudinal de l'élément de liaison (32a) étant égal à un axe de rotation (29a) de la fermeture à baïonnette (26a) .

8. Essuie-glace avec au moins un dispositif d'essuie-glace (12a ; 12b) selon l'une quelconque des revendications précédentes.
